# EUROPEAN PATENT APPLICATION

(11) **EP 2 084 962 A1**
(43) Date of publication of application: **05.08.2009**
(21) Application number: 07829617.5
(22) Date of filing: 11.10.2007
(51) Int. Cl.: A01M 1/14, A01M 1/02, A01M 1/20, A01N 25/34, A01N 51/00, A01N 65/00, A01P 19/00

(54) **HARMFUL INSECT TRAPPING DEVICE**

(30) Priority: 21.11.2006 JP 2006314632; 27.11.2006 JP 2006318663
(71) Applicant: Earth Chemical Co., Ltd., Tokyo 101-0048 (JP)
(72) Inventor: YOSHIDA, Shinya, Sakoshi, Ako city, Hyogo (JP); TATAMI, Kenji, Sakoshi, Ako city, Hyogo (JP); TAKAHASHI, Nobuharu, Sakoshi, Ako city, Hyogo (JP); YUI, Risa, Sakoshi, Ako city, Hyogo (JP)
(74) Representative: Grünecker, Kinkeldey, Stockmair & Schwanhäusser Anwaltssozietät
(86) International application number: PCT/JP2007/069879
(87) International publication number: WO 2008/062612

(57) **Abstract**

A harmful insect trap 10 including a container 11 having apertures 16,17, and a chemical agent containing at least a harmful insect attractant component and contained in the container 11, and adapted to attract a harmful insect into the container 11 through the apertures 16,17, wherein a linear protruded part 18 is disposed toward the chemical agent on an internal surface of the container 11. Thus provided is a harmful insect trap 10 realizing an improved attractant ability thereby executing efficient capture and control of the insect.

## Description

### TECHNICAL FIELD

The present invention relates to a harmful insect trap for capturing and/or controlling flying harmful insects such as flies and drosophilae by attracting into a container.

### BACKGROUND ART

As a prior harmful insect trap, there is known one having an inlet opening in a container and accommodating a chemical agent containing a harmful insect attractant component in the container, and evaporating the harmful insect attractant component in the ambient atmosphere to attract the flying harmful insect into the container thereby causing it to die (for example see Patent Reference 1).

Patent Reference 1: JP-A-2002-142643

### DISCLOSURE OF THE INVENTION

### PROBLEMS TO BE SOLVED BY THE INVENTION

On the other hand, an evident interest of users is recently directed to the cleanness of daily commodities and the harmful insect trap disclosed in the above-mentioned Patent Reference 1 is no exception, and it is desired, in such harmful insect trap, to further improve the insect attracting ability and to improve the effect of capture/control of the insect. Therefore investigation and improvement are being made on the harmful insect attractant, but such efforts alone are not sufficient. This is because, even with an excellent harmful insect attractant component, the harmful insect is attracted to the neighborhood of the trap but it is difficult to attract the harmful insect to the interior thereof, or, even if the harmful insect enters the interior of the trap, the insect may fly away to the exterior without contacting the chemical agent. Therefore, a desired effect is difficult to obtain even by blending an excellent insecticide with the harmful insect attractant component.

The present invention has been made in consideration of the aforementioned problem, and an object thereof is to provide a harmful insect trap capable of facilitating attraction into the interior of trap and securely contacting the attracted flying harmful insect with the chemical agent thereby achieving effective capture and control of the insect.

### MEANS FOR SOLVING THE PROBLEMS

In order to accomplish the aforementioned objective, the harmful insect trap of the present invention is characterized in the following.

(1) A harmful insect trap comprising a container having an aperture, and a chemical agent containing at least a harmful insect attractant component and contained in the container, and adapted to attract a harmful insect into the container through the aperture thereby achieving capture and/or control:
   wherein linear protruded parts toward the chemical agent on an internal surface of the container.
(2) A harmful insect trap according to (1):
   wherein the linear protruded parts are disposed equidistantly on the internal surface of the container.
(3) A harmful insect trap according to (1) or (2): wherein the container comprises a protruded part, protruded upwards at a placed state thereof.
(4) A harmful insect trap comprising a container having an aperture, and a chemical agent containing at least a harmful insect attractant component and contained in the container, and adapted to attract a harmful insect into the container through the aperture thereby achieving capture and/or control:
   wherein the container comprises a protruded part, protruded upwards at a placed state thereof, and
   the aperture is disposed at least on a lateral portion of the protruded part.
(5) A harmful insect trap according to any one of (1) to (4):
   wherein the chemical agent is contained in a bottom part of the container, and
   a lifted part is formed in the bottom part.
(6) A harmful insect trap according to any one of (1) to (5):
   wherein the container includes a main body and a cover member having a dome shape and assembled with the main body, and
   the aperture is disposed at least in the cover member.
(7) A harmful insect trap according to any one of (3) to (6):
   wherein the protruded part is formed in plural units.
(8) A harmful insect trap according to any one of (1) to (7):
   wherein the container is formed in a substantially polygonal shape.
(9) A harmful insect trap according to any one of (1) to (8):
   wherein the aperture is formed in a shape of a hole of which diameter is reduced from an external surface toward the chemical agent.
(10) A harmful insect trap according to any one of (3) to (9):
   wherein the protruded part comprises a design part.
(11) A harmful insect trap according to any one of (1) to (10):
   wherein the container comprises a bottle insertion hole for detachably mounting a chemical agent replenishing bottle for replenishing the chemical agent.
(12) A harmful insect trap according to any one of (1) to (11):
   wherein the container comprises a hanging part for hanging.
(13) A harmful insect trap according to any one of (1) to (12):
   wherein the container comprises a light-emitting portion in a part thereof.
(14) A harmful insect trap according to any one of (5) to (13):
   wherein the lifted part is so formed as to be integral with the protruded part and to be projected externally through the aperture.

In the construction (1) above, the flying harmful insect entering the container through the aperture, having a movement behavior of perching on the linear protruded part protruding on the internal surface and walking along the protruded part, is attracted to the chemical agent containing at least the harmful insect attractant component and contacts the chemical agent, and, by the action of an insecticide component contained in the chemical agent or by wetting of the wings when the chemical agent is in a liquid state or in a wet state (such as jelly or gel), thus becoming incapable of movement and becoming dead. As a result of investigations on the movement behavior of flying harmful insects, the inventors of the present invention have found that such behavior can be utilized to realize efficient attraction thereby achieving capture and/or control.
The aperture may be formed in single or plural and preferably has an area of from 10 to 300 mm² with a longitudinal size of from 5 to 30 mm and a lateral size of from 2 to 10 mm. When a smaller aperture is formed along with the above aperture, the smaller aperture preferably has an area of from 10 to 140 mm² with a longitudinal size of from 5 to 20 mm and a lateral size of from 2 to 7 mm. Furthermore, the linear protruded parts may be provided at even interval as long as the liner protruded parts are directed to the chemical agent, alternatively, the linear protruded parts are provided in a spiral arrangement.
According to the construction (2) above, the linear protruded parts, being equidistantly disposed on the internal surface of the container, cause the flying harmful insect entering the container to efficiently stay on the linear protruded parts and to be attracted to the chemical agent, and can also improve the strength of the container. In consideration of the movement behavior of the flying harmful insects such as flies and drosophilae, the linear protruded part advantageously has a height of from 0.5 to 5 mm and a width of from 0.5 to 2 mm.
According to the construction (3) above, the container has a protruded part, that is protruded upwards when the container is placed, thereby providing the flying harmful insect with a perch and effectively attracting the flying harmful insect.
The protruded part may be formed in single or plural. The protruded part preferably has a dimension of an external diameter of from 5 to 20 mm and a height of from 20 to 70 mm, in consideration of the moving behavior of the flying harmful insects. According to the construction (4) above, the container has a protruded part, protruded upwards when the container is placed, and the aperture is disposed at least on a lateral portion of the protruded part, thereby providing the flying harmful insect with a perch and effectively attracting the gathered and perched flying harmful insects from such aperture into the container. The aperture may be formed, within the lateral portion of the protruded part, in at least either of an end portion and a base portion of the protruded part.
According to the construction (5) above, the chemical agent is contained in a bottom part of the container and a lifted part is formed in the bottom part, so that the layer of the chemical agent is disposed in a deep part to improve a capturing effect and the filling amount of the chemical agent may be suppressed without deteriorating the effect thereof and the production cost may be reduced. Also in the case that the chemical agent is in a wet state such as gel or jelly, the construction is effective for suppressing shift of the chemical agent layer toward one side in the container, thereby preventing drying thereof.
The lifted part may be formed in single or plural, the lifted part preferably has a height within a range up to 60% of the height of the main body of the container. The tip of the lifted part may be formed into an irregular shape or in an inverted bowl shape.
According to the construction (6) above, the container includes a main body and a cover member having a dome shape and assembled with the main body and the aperture is disposed at least in the cover member, whereby the construction, utilizing the habit of flying harmful insect to like a dome shape, can gather the flying harmful insects on the cover member and further can promote entry into the interior thereof through the aperture.
According to the construction (7) above, the protruded part is formed in plural units to provide the flying harmful insect with many perches thereby more efficiently causing the flying harmful insects to perch and gather on the container and to be attracted to the interior of the container.
According to the construction (8) above, the container, being formed in a substantially polygonal shape, can be placed for example in contact with a corner of a room, whereby the trap can be placed stably without becoming an obstacle and without tumbling.
The substantially polygonal shape includes a triangular shape, a tetragonal shape and a sector shape.
According to the construction (9) above, the aperture is formed in a shape of a hole of which diameter is reduced from an external surface toward the chemical agent (for example a bowl shape having a hole in the bottom), thereby suppressing the flying harmful insect, entering the container through the aperture, from returning to the exterior of the container, and improving the capture and/or control efficiency for the flying harmful insect.
According to the construction (10) above, the protruded part includes a design part for example of a flower shape, thus constituting a perch by such design part in addition to the protruded part and more effectively attracting the flying harmful insect into the container.
Also in such construction, the design part may be impregnated with a flying harmful attractant component or coated with a sticky chemical agent to more effectively controlling the flying harmful insect perched on the design part. Also the design part may be detachably mounted on the protruded part or may be integrally formed with the protruded part. In the case that the design part is detachably mounted on the protruded part, the design part may be advantageously prepared in plural types and may be changed according to tastechoice of the user. Furthermore, the entire protruded part may be so formed as to have a design property such as a flower shape.
According to the construction (11) above, the container includes a bottle insertion hole for detachably mounting a chemical agent replenishing bottle for replenishing the chemical agent, whereby, when the effect of the chemical agent decreases, it can be replenished easily for example by a chemical agent replenishing bottle that is made separately available. Consequently the container of the harmful insect trap can be re-used and can improve the convenience of use.
According to the construction (12) above, the container, having a hanging part for hanging, can be hung in a predetermined room or the like, thus being usable in a necessary position without becoming an obstacle and with improved convenience of use.
According to the construction of (13) above, as the flying harmful insect has a phototaxis, having a light-emitting portion in a part of the container, can attract the flying harmful insect more effectively into the container and can further improve the advantage of capture and/or control of the insect.
According to the construction (14) above, the lifted part is so formed as to be integral with the protruded part and to protrude externally through the aperture, so that the structure can be simplified without deteriorating the efficiency of capture and/or control, and the production cost can be suppressed.

Also, based on investigations, the present inventors have found that the flying harmful insects tend to gather on a container having a warm color. Therefore, irrespective of the container shape and the harmful insect attractant component, an improved attractive property can be realized to achieve effective capture and/or control by coloring the container in a warm color.

Also based on the investigations, the present inventors have found that the flying harmful insects tend to gather on a container having an embossed surface. Therefore, irrespective of the container shape and the harmful insect attractant component, an improved attractive property can be realized to achieve effective capture and/or control by embossing the container surface.

The container in the present invention is constituted of a main body or of a main body and a cover member. As to the shape thereof, it may have a substantially polygonal flat shape that can be placed in a corner of an installation site. As to the material thereof, it may be formed by any material having a water-repellent property or a water resistance in order to be placed also in a wet place, even by a paper, a pulp or a corrugated cardboard, and the container is formed with an internal volume capable of containing an amount of the chemical agent necessary for a desired effect.

The aperture of the container may be formed with any dimension and shape that allow entry of the flying harmful insect, and may be formed in one or more positions in the main body and/or the cover member, in continuous or discontinuous manner on at least a surface of the main body and/or the cover member. It may also be formed in a shape of a hole of which diameter is reduced from an external surface toward the chemical agent.

The linear protruded parts of the container may be formed on the internal surface of the container, and may be disposed equidistantly. Alternatively, the linear protruded parts may be formed so as to have a spiral inner space shape. Further, the linear protruded parts are not limited to be formed on the inner surface of the container and may be formed on an outer surface of the container.

The protruded part of the container may be of any shape protruded upwards in a placed state, and it is sufficient to be provided in one or more units. Also the aperture may be disposed at least on a lateral portion of the protruded part.

The lifted part of the container may be disposed at the bottom part of the container, and may be formed integrally with the protruded part may protrude externally through the aperture. Also the design part may be formed in the protruded part itself or separately therefrom.

The bottle insertion hole of the container may be so formed that the chemical agent replenishing bottle can be detachably mounted, and may be formed in various shapes.

As the hanging part of the container, shape, material, disposition or the like may be selected in consideration of the weight of the container and the chemical agent and of the humidity. Also the dimension (length) of the hanging part is so selected as to realize a hanging not becoming an obstacle, for example not contacting the articles in the room or the head of the user, and may also be made adjustable. It is sufficient to provide on or more units of the hanging parts so far as the container can be stably held.

The light-emitting portion of the container may be made, for example, in an electrical light-emitting portion (such as an LED or a small electric bulb), or a chemical light-emitting portion (such as a phosphorescent paint or a fluorescent paint), and the light-emitting portion may be formed only in a portion of the container.

In addition, according to the harmful insect trap according to the invention, a magnet, a sucker or a double adhesive tape may be provided on the bottom of the container to increase the fixture at the installation place.

Further, an adhesive may be applied to a surface or inner surface of the container.

Now there will be described a basic capturing mechanism by the harmful insect trap according to the invention constructed as described above.
When the harmful insect trap is placed in a room or the like, the flying harmful insects gather and perch on the protruded part serving as a perch. Then the flying harmful insect senses the harmful insect attractant component evaporating from the aperture, and enters the container through the aperture.

Then the flying harmful insects that have entered the container gather and perch on the liner protruded part, and, being attracted by the atmosphere of the harmful insect attractant component, proceeds along the protruded part toward the chemical agent. Also in the case that the flying harmful insect that has entered the container perches on the lifted part, it is attracted by the atmosphere of the harmful insect attractant component, and proceeds along the lifted part toward the chemical agent.

The flying harmful insect proceeding to the chemical agent further proceeds, for example in the case that the chemical agent is formed by gel bodies, to a deeper part through the gaps of the gel bodies, and, by the action of an insecticide component contained in the chemical agent or by wetting of the wings, becomes incapable of movement and eventually dead.

Subsequently, the chemical agent to be contained in the container may be of various shapes such as a liquid, a particle, a gel, a jelly, or a solid, but a gel-state particle (diameter: 5 to 25 mm) is preferable in consideration of the efficiency of capture and/or control. Such gel-state particle (also referred to as gel body) is formed by dipping and swelling a liquid-absorbent polymer in a solution containing at least a harmful insect attractant component.
The gel body may have a spherical shape, a rod shape, a similar shape thereto, a polygonal shape or an amorphous shape such as a fragment shape, so far as a gap allowing entry of the flying harmful insect is formed between the gel bodies. Also the gel bodies may be of a uniform shape or may be a mixture of different sizes. Also the gel-state particle may have a round shape or a polygonal shape.

The size of the gel body is, in case of capturing flies and drosophilae, preferably from 5 to 25 mm, more preferably from 10 to 15 mm. The size of the gel body within such range allows to facilitate entry of the flying harmful insect into the deep part of the container through the gap and to render the escape difficult, thereby achieving efficient capture and control of the insect. The size of the gel body means a diameter in case of a spherical shape, or a longitudinal length in case of a rod shape or a cuboid (cubic) shape.

The number of gel bodies contained in the container is preferably from 15 to 600 body/100 cm³, more preferably from 50 to 200 body/100 cm³. Within such range, an optimum gap is formed between the gel bodies to enable more effective capture of the flying harmful insect. Besides, the distance of the gel bodies in the container is preferably 10 mm or less, and more preferably 5 mm or less. Such range enables to form a gap allowing entry of the flying harmful insect and is preferable for promoting contact with the body surface or the wings of the flying harmful insect thereby hindering the movement thereof.

Also the filling depth of the gel bodies in the container is preferably 1.5 cm or more, more preferably 2.5 cm or more. An excessively shallow depth may not be sufficient for entering of the flying harmful insect and may facilitate escaping of the flying harmful insect to the exterior. It is referred that the number of the gel body layer is three more.
The "layer" used herein means a state where the gel bodies are stacked upwards when the container is placed.

The liquid absorbent polymer may be a water-absorbent polymer or an oil-absorbent polymer, and examples thereof include a hydrolysate of a starch-acrylonitrile graft polymer, a crosslinked substance of a starch-sodium acrylate graft polymer, a polyacrylic acid copolymer, a crosslinked substance of sodium polyacrylate, a crosslinked substance of an isobutylene-maleic acid copolymer or a salt thereof, a crosslinked substance of a polyvinyl alcohol-sodium acrylate graft polymer, a salt of a crosslinked substance of a polyvinyl acetate-ethylenic unsaturated carboxylic acid copolymer, a crosslinked polymer of long-chain alkyl acrylate, polysorbornene, an alkylstyrene-divinylbenzene copolymer, a methacrylate-based crosslinked copolymer, and a denatured alkylene oxide etc.
More preferable examples include a crosslinked substance of a partial sodium salt of an actylic acid polymer, and a polyacrylic acid copolymer etc., of which specific examples include Aquacalk TWB (manufactured by Sumitomo Seika Co.), and Asco Hisobead (manufactured by Aekyung Specialty Chemicals Co., Ltd.).
Also there may be used a material having a large surface area contacting with the air, and examples include a crushed substance of gel material (crushed gel), prepared with agar, carrageenan, or gellan gum, and a liquid absorbent material such as a sponge, a spongy substance or a pulp.

Examples of the harmful insect attractant component include shaoxing wine, beer, wine, acetoin, black vinegar, red vinegar, vinegar, various fruit extracts, fermented vegetable or fruit, miso (fermented soybean paste), yeast, honey, liquid sugar syrup, black sugar, sugar and various vegetable-type or animal-type feeds etc.

In order to increase the control effect for the flying harmful insect, it is possible to use an insecticide component, for example, a pyrethroid compound such as chrysanthemum cinerariaefolium extract, natural pyrethrin, prarethrin, imiprothrin, phthalthrin, allethrin, transfluthrin, resmethrin, phenothrin, cyphenothrin, permethrin, cypermethrin, etofenprox, cyfluthrin, deltamethrin, biphenthrin, fenvalerate, fenpropathrin, empenthrin, silafluophen, methofluthrin or profluthrin etc., an organic phosphorus compound such as fenitrothion, diazinone, malathion, pyridafenthion, prothiophos, phoxim, chloropyriphos, or dichlorvos etc., a carbamate type compound such as carbaryl, propoxur, methomyl, or thiodicarb etc., an oxadiazole type compound such as methoxadiazone etc., a phenylpyrazole type compound such as fipronil etc., a sulfonamide type compound such as amidoflumet etc., a nicotinoid type compound such as dinotefuran, or imidacloprid, or an insect growth control agent such as methoprene, hydroprene, or pyriproxyfen etc. along with an insecticidal essential oils including orange oil, peppermint, benzyl alcohol etc. as the insecticide component. Among these insecticide components, dinotefuran which is a water-soluble insecticide is preferable, as water is used in preparing the gel bodies. Dinotefuran is a water-soluble insecticide and can be used without a surfactant or organic solvent. Accordingly it is advantageous to prevent a problem of repellant by the insect.
The content of the insecticidal component in the gel bodies is preferably from 0.01 to 0.5% by mass. When dinotefuran is used as an example, the content is preferably from 0.05 to 0.2% by mass.
For adding the insecticidal component, the harmful insect attractant component may be added in the same gel bodies. Alternatively, these components may be contained as a dual component system where the harmful insect attractant component is added in gel bodies or other forms of bodies which are separately formed from those for the insecticidal component.

In addition, in order to hinder the movement of the flying harmful insect (by wetting the wings to incapacitate mobility) and to kill the insect by capturing, a high viscosity may be provided on the surface of the chemical agent by utilizing, in combination, a viscous component for example of polybutene, natural rubber, guar gum, xanthane gum, starch or saccharoids etc. By such an added component, the capturing effect can be further improved.

In the present invention, water is normally contained as a solvent in addition to the above-described components, and other components may be added suitably so far as the attractant property is not hindered.
Examples of such other components include an accidental ingestion aversive agent, an antiseptic agent, a pH adjuster, a stabilizing agent, a dye and a fragrance etc.
Examples of the accidental ingestion aversive agent include denatonium benzoate (trade name: Bitrex) and red pepper essence etc.
Examples of the antiseptic agent include quaternary ammonium salt such as cetylpyridinium chloride or the like, potassium sorbate and paraben etc.
Examples of the pH adjuster include citric acid or phosphoric aid and salts thereof etc.
Examples of the stabilizing agent include butylated hydroxytoluene (BHT) and butylated hydroxyanisole (BHA) etc.
Examples of the dye include various dyes of red, blue, yellow, green, black or brown color etc.
Examples of the fragrance include those of melon, vanilla, strawberry, mango, apple, pear, banana or durian etc.
Also addition of trimethylglycine as water retention agent is preferable as it can suppress water evaporation from the gel thereby retaining the water in the gel over a prolonged period and maintaining the effect of attraction and capture. The content of trimethylglycine is preferably from 0.1 to 10% by mass.

Further, to improve the attracting effect for the flying harmful insects, the chemical agent may be provided with light emitting elements. For example, light emitting elements or photo luminescent elements are added in the gel bodies along with the chemical agent so that the gel bodies emit light.

Also examples of the flying harmful insect as the target of the present invention include Drosophila melanogaster, D. hydei, D. virilis, D. immigrans, Phoridae, D. simulans, Lucilini and Calliphorini.
Further, the invention is applicable to not only the above-described flying harmful insects, but also other flying harmful insects such as mosquito or bee

### ADVANTAGE OF THE INVENTION

According to the harmful insect trap of the invention, it is possible to attract effectively the flying harmful insect such as mosquito and bee into the trap and to securely contact the flying harmful insect, entering the interior of the trap, with the chemical agent, thereby accomplishing effective capture and/or control of the insect.

### BRIEF DESCRIPTION OF THE DRAWINGS

Fig. 1 is an external perspective view, seen from obliquely above, of a harmful insect trap constituting a first embodiment of the present invention.
Fig. 2 is an external perspective view, seen from obliquely below, of a cover member, employed in the harmful insect trap shown in Fig. 1.
Fig. 3 is an external perspective view, seen from obliquely above, of a main body, employed in the harmful insect trap shown in Fig. 1.
Fig. 4 is a vertical cross-sectional view of the harmful insect trap shown in Fig. 1.
Fig. 5 is an external perspective view, seen from obliquely above, of a harmful insect trap constituting a second embodiment of the present invention.
Fig. 6 is an external perspective view, seen from obliquely above, of a harmful insect trap constituting a third embodiment of the present invention.
Fig. 7 is an external perspective view, seen from obliquely above, of a harmful insect trap constituting a fourth embodiment of the present invention.
Fig. 8 is an external perspective view, seen from obliquely above, of a harmful insect trap constituting a fifth embodiment of the present invention.
Fig. 9 is a vertical cross-sectional view of the harmful insect trap constituting a sixth embodiment of the present invention.
Fig. 10 is an external perspective view, seen from obliquely above, of a harmful insect trap constituting a seventh embodiment of the present invention.
Fig. 11 is a vertical cross-sectional view of the harmful insect trap constituting an eighth embodiment of the present invention.
Fig. 12 is a vertical cross-sectional view of the harmful insect trap constituting a ninth embodiment of the present invention.
Fig. 13 is an external perspective view of a harmful insect trap constituting a tenth embodiment of the present invention.

### DESCRIPTION OF SYMBOLS

- 10, 30, 40, 50, 60, 70, 80, 90, 100, 110:: harmful insect trap
- 11:: container
- 12:: cover member
- 13:: main body
- 14:: chemical agent
- 15, 31:: protruded part
- 16, 51:: larger aperture (aperture)
- 17, 102:: smaller aperture (aperture)
- 18:: cover member-side protruded part (linear protruded part)
- 20:: main body-side protruded part (linear protruded part)
- 22:: lifted part
- 61:: design part
- 71:: chemical agent replenishing bottle
- 72:: bottle insertion aperture
- 81:: hanging part
- 91:: light-emitting portion
- 101:: integral protruded part (lifted part)
- 103:: tapered surface
- 111:: pillar part

### BEST MODE FOR CARRYING OUT THE INVENTION

In the following, preferred embodiments of the present invention will be described in detail, with reference to the accompanying drawings.

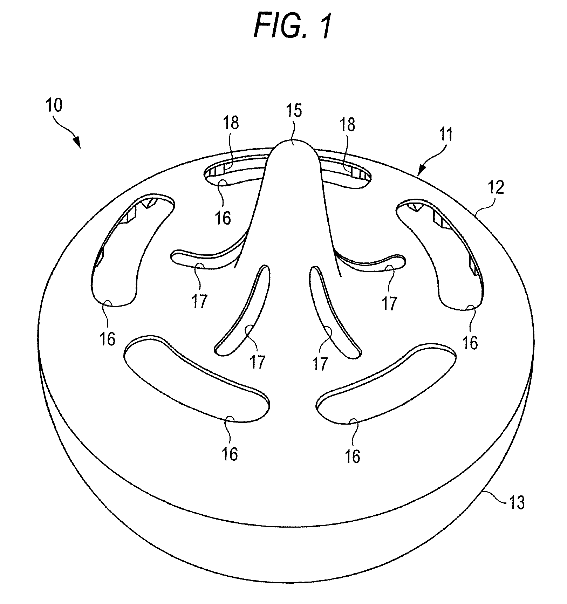

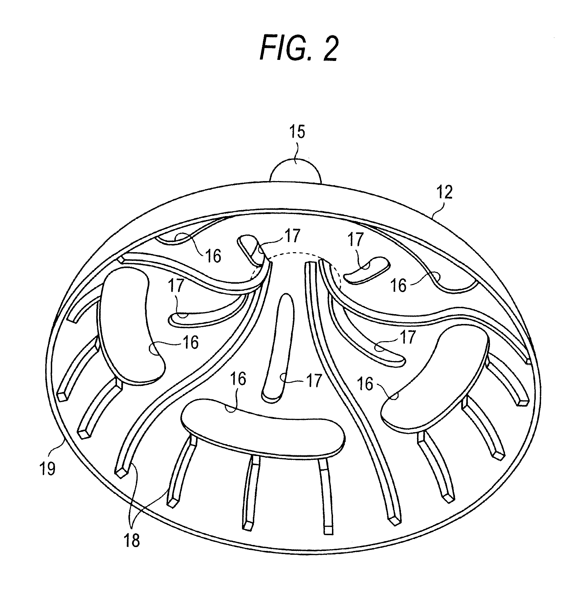

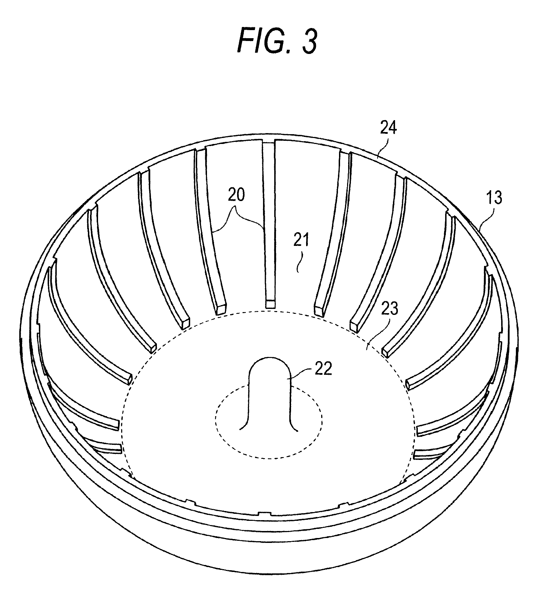

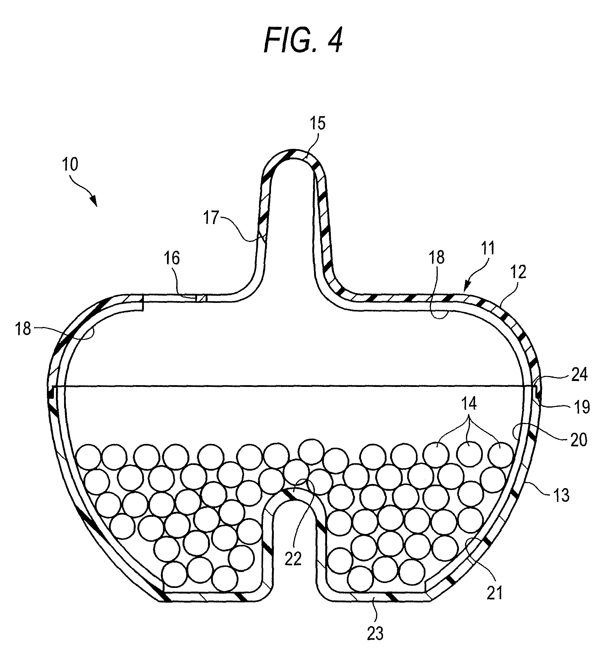

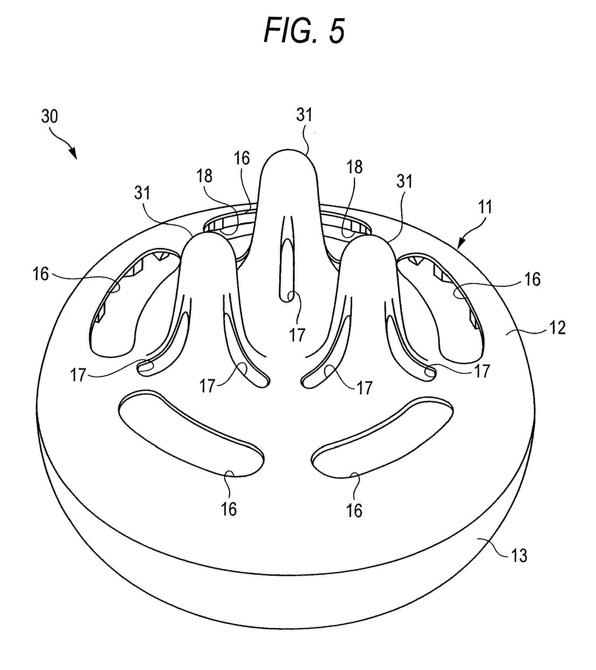

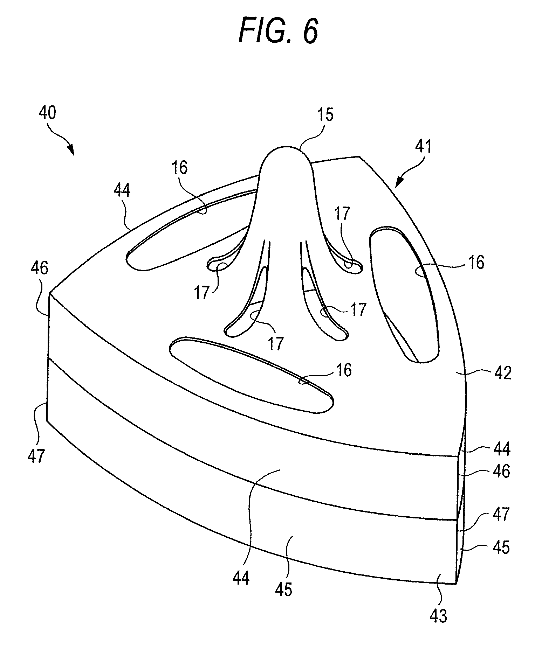

Fig. 1 is an external perspective view, seen from obliquely above, of a harmful insect trap constituting a first embodiment of the present invention; Fig. 2 is an external perspective view, seen from obliquely below, of a cover member, employed in the harmful insect trap shown in Fig. 1; Fig. 3 is an external perspective view, seen from obliquely above, of a main body, employed in the harmful insect trap shown in Fig. 1; Fig. 4 is a vertical cross-sectional view of the harmful insect trap shown in Fig. 1; Fig. 5 is an external perspective view, seen from obliquely above, of a harmful insect trap constituting a second embodiment of the present invention; and Fig. 6 is an external perspective view, seen from obliquely above, of a harmful insect trap constituting a third embodiment of the present invention.

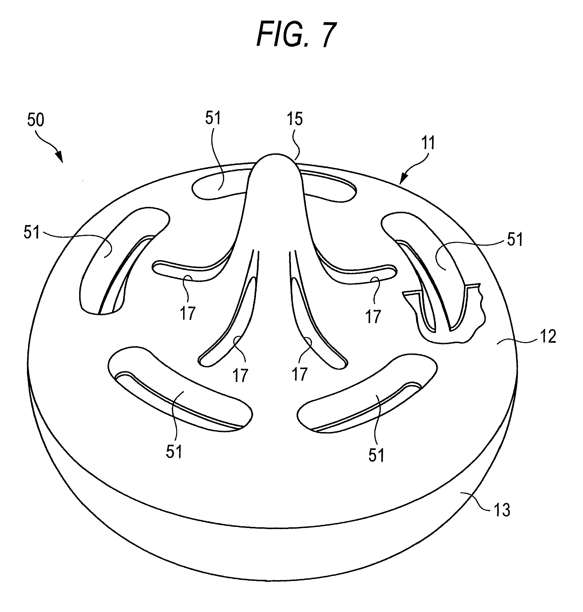

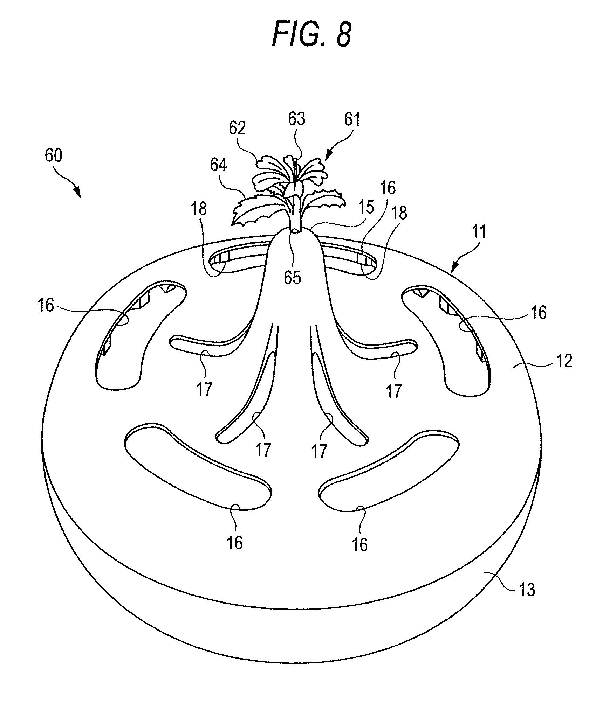

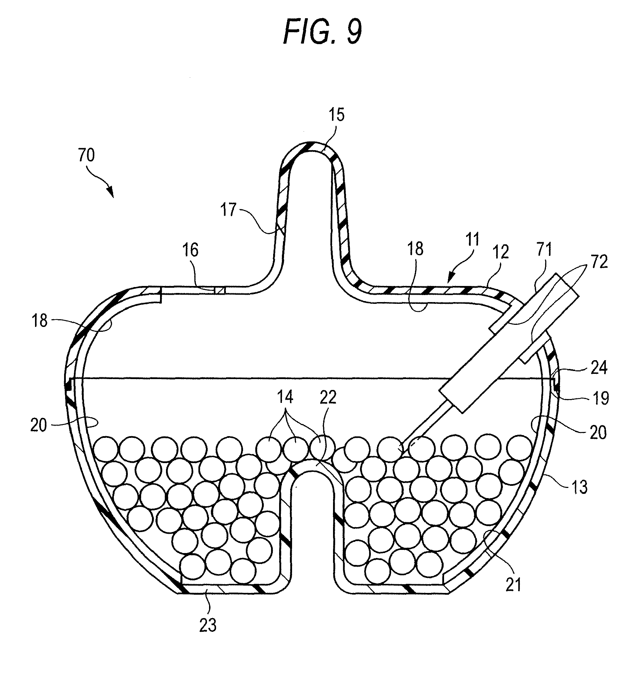

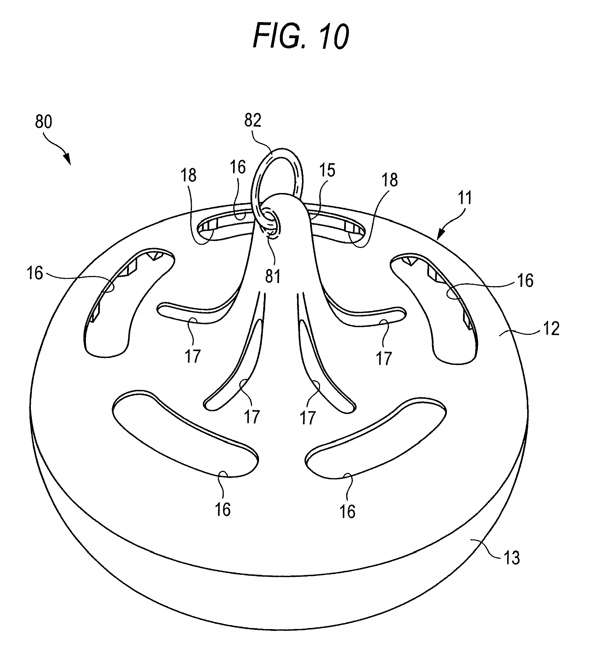

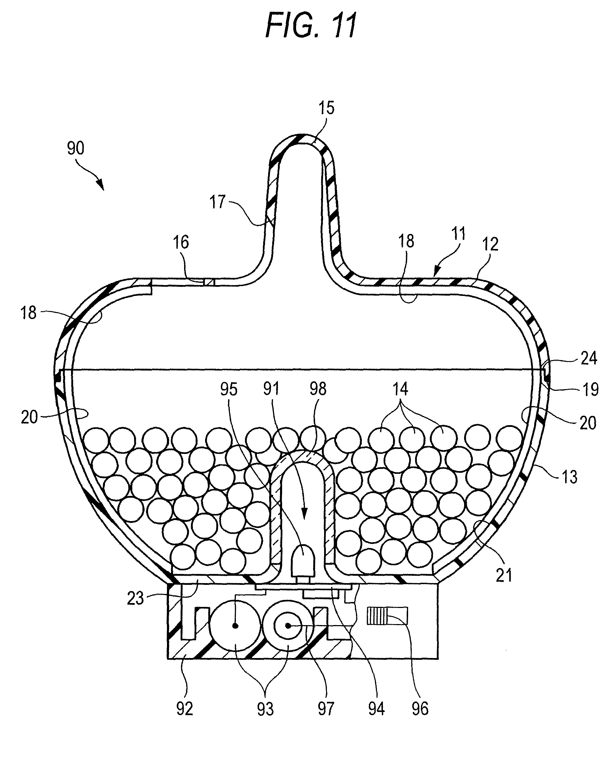

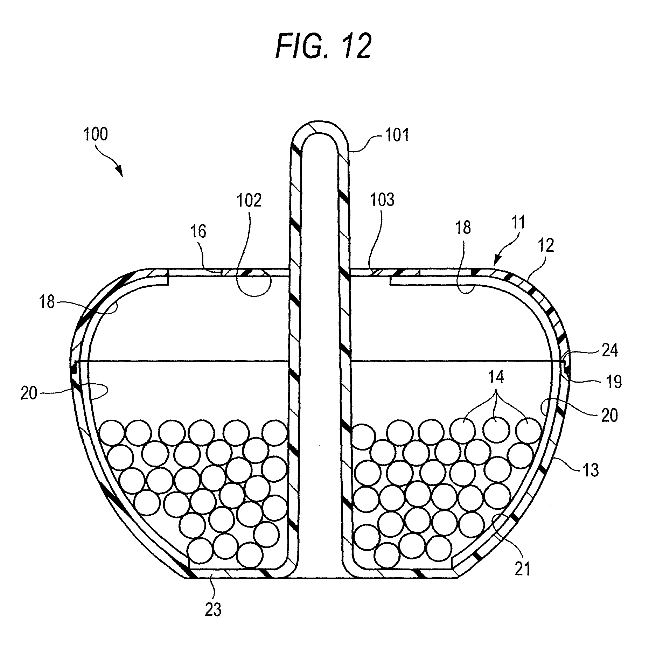

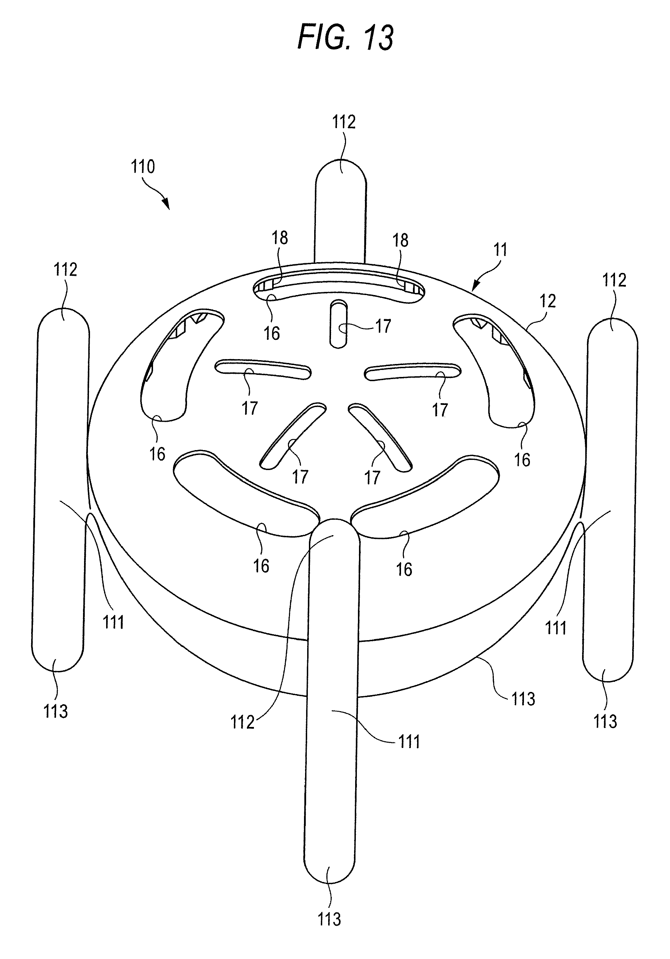

Also Fig. 7 is an external perspective view, seen from obliquely above, of a harmful insect trap constituting a fourth embodiment of the present invention; Fig. 8 is an external perspective view, seen from obliquely above, of a harmful insect trap constituting a fifth embodiment of the present invention; Fig. 9 is a vertical cross-sectional view of the harmful insect trap constituting a sixth embodiment of the present invention; Fig. 10 is an external perspective view, seen from obliquely above, of a harmful insect trap constituting a seventh embodiment of the present invention; Fig. 11 is a vertical cross-sectional view of the harmful insect trap constituting an eighth embodiment of the present invention; Fig. 12 is a vertical cross-sectional view of the harmful insect trap constituting a ninth embodiment of the present invention; and Fig. 13 is an external perspective view of a harmful insect trap constituting a tenth embodiment of the present invention.
In any embodiment, the aforementioned chemical agent is contained in the container.

### (First embodiment)

As illustrated in Fig. 1, a harmful insect trap 10 constituting a first embodiment of the present invention is constituted of a container 11, including a cover member 12 and a main body 13, and a chemical agent 14 (cf. Fig. 4) contained in the container 11.

The cover member 12 is formed by a resin of a small thickness into a circular dome shape, and is equipped with a protruded part 15 in a central portion thereof. The cover member 12 is colored in a warm color such as red, brown or orange, and is subjected to an embossing work (not shown) over the entire surface.

The protruded part 15 is constructed integrally and is formed into a polygonal shape having a predetermined roundness with predetermined external diameter and height. The protruded part 15 protrudes upwards when the harmful insect trap 10 is placed, and serves to provide the flying harmful insect such as a fly, flying in the room, with a perch.

In the cover member 12, five larger apertures 16 are formed between the protruded part 15 and an external brim, equidistantly along the circumferential direction, and five smaller apertures 17 are formed equidistantly around the protruded part 15.

The larger aperture 16 has an oval shape of an internal diameter larger than the size of the flying harmful insect, and is arranged in plural units in such a manner that the longer diametral direction thereof coincides with the circumferential direction of the cover member 12, thus forming communicating paths from the upper surface of the cover member 12 to the interior of the main body 13.

The smaller aperture 17 has an oval shape of an internal diameter smaller than that of the larger aperture 16, and is arranged in plural units in such a manner that the shorter diametral direction thereof coincides with the circumferential direction of the cover member 12, thus forming communicating paths to the interior of the main body 13, over a lateral part in a base portion of the protruded part 15 and a part of the upper surface of the cover member 12.

The larger aperture 16 and the smaller aperture 17 may have any shape enabling entry of the flying harmful insect, and, in addition to the shape shown in Fig. 1, may have various shapes, for example one based on functionality such as an oval shape or a polygonal shape, or one having a design property such as a shape of flower petals, a star shape, or an animal or character shape.

The main body 13 is formed by a resin of a small thickness into a bowl shape, and is colored in a warm color such as red, brown or orange.

As illustrated in Fig. 2, on the internal surface of the cover member 12, plural linear cover-member-side protruded parts (linear protruded parts) 18 are formed in a protruded state, equidistantly along the circumferential direction of the cover member 12.

The cover-member-side protruded parts 18 are formed, with a predetermined height, continuously from the inner surface of the protruded part 15 to the outer brim of the cover member 12 and from the outer side of the larger apertures 16 to the outer brim of the cover member 12. The protruded part 18 has such a function that the flying harmful insect, entering the container 11 through the larger aperture 16 or the smaller aperture 17, can easily perch on and can easily move along. Also the protruded part 18 may have an irregular or rough surface to further facilitate the flying harmful insect to move along the protruded part.

The cover member 12 has, at a lower end of the outer brim, a coupling part 19 for assembling with the main body 13.

As illustrated in Fig. 3, on the internal surface of the main body 13, plural linear main-body-side protruded parts (linear protruded parts) 20 are formed in a protruded state, equidistantly along the circumferential direction of the main body 13, and a chemical agent containing part 21 and a lifted part 22 are formed on the bottom portion. Also a coupling receiver 24 for assembling with the cover member 12 is provided at an upper end of the outer brim.

The main-body-side protruded parts 20 are formed, with a height same as that of the cover-member-side protruded part 18 of the cover member 12, continuously from the upper end to a bottom plate 23. The main-body-side protruded part 20 has, when the cover member 12 is assembled with the main body 13, a function that, together with the cover-member-side protruded part 18, the flying harmful insect entering the container 11 can easily perch on and move along.

The lifted part 22 is formed, at the central portion of the chemical agent containing part 21, in a form similar to that of the protruded part 15 and upwards from the bottom plate 23. When the chemical agent 14 is accommodated in the chemical agent containing part 21 of the main body 13 as illustrated in Fig. 4, the chemical agent 14 is contained in the chemical agent containing part 21 with the lifted part 22 projecting at the center, so that the lifted part 22 has a function of avoiding an unnecessary increase in the amount of the chemical agent 14 contained in the main body 13 thereby avoiding waste of the chemical agent 14, and a function of increasing the depth of layer of the chemical agent 14 thereby avoiding drying thereof. The lifted part 22 further preferably projects upwards from the surface of the chemical agent 14, thus further serving to provide the flying harmful insect with a perch.

The container 11 is assembled integrally by externally fitting the coupling part 19 of the cover member 12 on the coupling receiver 24 of the main body 13. The cover-member-side protruded part 18 and the main-body-side protruded part 20 may be so arranged as to constitute a continuous linear structure in the container 11, when the cover member 12 is assembled with the main body 13. Such construction can further improve the attractant property to the chemical agent 14.

In the present embodiment, as described above, the flying harmful insects entering the container 11 through the larger aperture 16 or the smaller aperture 17 gather and perch on the cover-member-side protruded part (linear protruded part) 18 or the main-body-side protruded part (linear protruded part) 20 protruded on the internal surface, then move along the linear protruded part 18 or 20 under attraction by the chemical agent 14, and, by the action of an insecticide component contained in the chemical agent 14 or by wetting of the wings, thus become incapable of movement and eventually dead. Thus, the moving behavior of the flying harmful insect can be effectively utilized for achieving an effective attraction thereby accomplishing capture and control of the insect.

Also according to the present embodiment, the cover-member-side protruded parts 18 and the main-body-side protruded parts 20, disposed equidistantly on the internal surface of the container 11, cause the flying harmful insect entering the container 11 to efficiently perch on the protruded parts 18, 20 thereby achieving attraction to the chemical agent 14 more effectively.

Further according to the present embodiment, the container 11, having the protruded part 15 protruding upwards in a placed state, can provide the flying harmful insect flying with a perch for example, and can more effectively attract the flying harmful insects, gathered and perched on the protruded part 15, into the container 11 through the apertures 16, 17.

Also the present embodiment, in which the harmful insect attractant 14 is contained in the bottom portion of the container 11 and the lifted part 22 is disposed at the bottom portion, can avoid an unnecessary use of the chemical agent 14, and increases the depth of layer of the chemical agent 14 thereby avoiding drying of the chemical agent 14.

Furthermore the present embodiment, in which the container 11 includes the main body 13 and the cover member 12 having a dome shape and being assembled with the main body 13 and in which the apertures 16, 17 are formed on the cover member 12, can gather the flying harmful insects on the cover member 12, utilizing the habit of the flying harmful insect to like a dome shape.

Also according to the present embodiment, the container 11, being colored in a warm color, can attract the flying harmful insect utilizing the behavior thereof.

Also according to the present embodiment, the container 11, having an embossing on the surface, provides the flying harmful insect with a good foothold and causes entry thereof into the interior through the apertures 16, 17, thereby further improving the attracting ability and achieving efficient capture and control of the insect.

### (Second embodiment)

In the following, a second embodiment of the present invention will be described with reference to Fig. 5.
In the following embodiments, component parts same as those in the foregoing first embodiment will be represented by same or corresponding symbols and the description therefor will be abbreviated or omitted.

A harmful insect trap 30 of the present embodiment includes three protruded parts 31 on the upper surface of the cover member 12.
Other constructions are similar to those in the aforementioned first embodiment.

The protruded parts 31 are equidistantly formed in such positions as to form an equilateral triangle on the upper surface of the cover member 12, and end portions thereof are formed in a polygonal shape having a predetermined roundness, with predetermined external diameter and height.

Therefore, the present embodiment can provide the flying harmful insect with many perches, thereby causing the flying harmful insects to gather and perch on the container 11 and to be attracted into the container 11 more effectively.

### (Third embodiment)

In the following, a third embodiment of the present invention will be described with reference to Fig. 6.

A harmful insect trap 40 of the present embodiment has such a construction that a container 41, constituted of a cover member 42 having a single protruded part 15 and a main body 43, is formed into a substantially polygonal shape having three corners, namely into a substantially triangular shape, and has three large apertures 16.
Other constructions are similar to those in the aforementioned first embodiment.

More specifically, in the present embodiment, the cover member 42 and the main body 43 respectively have outward convex lateral faces 44, 45 and three vertexes 46,47.

Therefore, in the present embodiment, as the cover member 42 and the main body 43 of the container 41 are formed into a triangular shape, the vertexes 46, 47 can be positioned in close contact for example with a corner of a room, so that the harmful insect trap 40 itself can be stably placed without tumbling.
The container 41 is not limited to a substantially triangular shape but may also be formed in a shape having a corner in at least a part, for example in a substantially tetragonal shape, and various polygonal shapes may be adopted so far as it can be closely contacted for example with a corner of a room.

### (Fourth embodiment)

In the following, a fourth embodiment of the present invention will be described with reference to Fig. 7.

A harmful insect trap 50 of the present embodiment has such a construction having, on the upper surface of the cover member 12, larger apertures 51 each formed in a shape of a hole of which diameter is reduced from an external surface toward the chemical agent 14, namely a bowl shape having a hole in a part of the bottom.
In addition to the larger apertures 51, smaller apertures 17 may also be formed in such bowl shape from the external surface toward the chemical agent 14.
Other constructions are similar to those in the aforementioned first embodiment.

Therefore, according to the present embodiment, the larger apertures 51, being formed in a bowl shape having a hole in a part of the bottom directed from the external surface toward the chemical agent 14, suppresses the flying harmful insect, entering the container 11 through the larger aperture 51, from returning to the exterior of the container 11, thereby improving the capture and/or control efficiency for the flying harmful insect.

### (Fifth embodiment)

In the following, a fifth embodiment of the present invention will be described with reference to Fig. 8.

In the harmful insect trap 60 of the present embodiment, the protruded part 15 is provided, at an end portion thereof, with a design part 61 which is formed by liquid-absorbent cloth or paper and represents a flower shape constituted of a flower petal portion 62 representing flower petals, a pistil portion 63 representing stamina or pistils, and a calyx portion 64 representing calyxes or receptacles, thus serving as an accent to the flying harmful insect.
Other constructions are similar to those in the aforementioned first embodiment.

The design part 61 is detachably inserted in a mounting hole 65, formed at the end of the protruded part 15, and may be changed, by preparing plural designs, according to the taste or mood of the user.
Also in consideration of the handling property, the design part 61 may be integrally molded with the protruded part 15, or the cover member 12 may have the design part in at least a part thereof in such a manner that the apertures are formed suitably.

Also the design part 61 may be impregnated with a harmful insect attractant component or may be coated with a chemical agent having stickiness.

Therefore, the present embodiment, in which the protruded part 15 has the design part 61 serving as an accent to the flying harmful insect, provides the perch not only by the protruded part 15 but also by the design part 61 thereby more effectively attracting the flying harmful insect into the container 11.
The design part is not restricted to a part of the protruded part 15 but the entire protruded part 15 may be so constructed as to constitute a design shape.

### (Sixth embodiment)

In the following, a sixth embodiment of the present invention will be described with reference to Fig. 9.

A harmful insect trap 70 of the present embodiment is provided, in a part of the brim portion of the cover member 12 of the container 11, with a bottle insertion aperture 72 for detachably mounting a chemical agent replenishing bottle 71 for replenishing the chemical agent 14.
Other constructions are similar to those in the aforementioned first embodiment.

The chemical agent bottle 71 is formed in a shape of a bottle or a tube. The chemical agent bottle 71 is packed together with the harmful insect trap 70 or is sold separately, and is mounted on the bottle insertion aperture 72 when the effect of the chemical agent 14 decreases, thus replenishing the chemical agent 14 by being pushed from the rear side of the main body or by being pinched on both sides.

Therefore, the present embodiment, provided in the cover member 12 of the container 11 with the bottle insertion aperture 72 for detachably mounting the chemical agent replenishing bottle 71 for replenishing the chemical agent 14, is capable, for example when the effect of the chemical agent 14 decreases, of achieving easy replenishment with the chemical agent replenishing bottle 71. Consequently the container 11 of the harmful insect trap 70 need not be discarded but can be re-used and the convenience of use can be improved.

### (Seventh embodiment)

In the following, a seventh embodiment of the present invention will be described with reference to Fig. 10.

A harmful insect trap 80 of the present embodiment has a hanging part 81 for hanging at the end of the protruded part 15 of the container 11.
Other constructions are similar to those in the aforementioned first embodiment.

The hanging part 81 is a lateral hole formed in the end portion of the protruded part 15, in which a ring-shaped member 82 engages to enable a hanging from a ceiling or the like by such ring-shaped member 82.
The hanging part 81 needs only to enable hanging from the ceiling or the like, and the hanging parts for example of hooks may be disposed equidistantly along the circumferential direction of the lateral portion of the cover member 12 instead of the end portion of the protruded part 15. Also the hanging part 81 may be formed integrally with the protruded part 15 or may be detachably mounted thereon.

In the present embodiment, therefore, the container 11, having the hanging portion 81, can be placed in a suitable position for use, and the convenience of use can thus be improved.

### (Eighth embodiment)

In the following, an eighth embodiment of the present invention will be described with reference to Fig. 11.

In a harmful insect trap 90 of the present embodiment, a light-emitting portion 91 is provided at the bottom portion of the container 11, and a lifted part 98 is formed by a transparent resin.
Other constructions are similar to those in the aforementioned first embodiment.

The light-emitting portion 91 is constituted of a case 92 detachably fixed to the lower surface of the main body 13, a battery 93 constituting a power source, a circuit board 94, an LED 95 constituting a light source, a switch 96, and a wiring 97, and is so assembled that the LED 95 is in a position from the bottom portion of the main body 13 to the interior of the lifted part 98.
Also the LED 95 may be replaced by an electric bulb, in which case the circuit board 94 can be dispensed with and replaced by a bulb holder.

In the harmful insect trap 90, the LED 95 emits light by turning on the switch 96, and the light is directed to the exterior through the chemical agent 14 and the apertures 16, 17 and is sensed by the flying harmful insect having phototaxis. Further, not only the lifted part 98, but also other parts or all of the harmful insect trap 90 may be formed with an optical transparent material.

Therefore, the present embodiment, having the light-emitting portion 91 at the bottom portion of the container 11, can attract the flying harmful insect more effectively into the container 11 utilizing the phototaxis habit of the flying harmful insect, thereby improving the capture and/or control efficiency.
One directly applying a luminous paint or a phosphorescent paint to the lifted part or the container, or light-emitting system utilizing an artificial lightning bug (enzyme) may be used instead of the constitution of LED95 and the like.

### (Ninth embodiment)

In the following, a ninth embodiment of the present invention will be described with reference to Fig. 12.

In a harmful insect trap 100 of the present embodiment, the lifted part (22) and the protruded part (15) are formed integrally to construct an integral protruded part 101 that projects from the bottom portion of the main body 13 to the exterior, penetrating through a smaller aperture 102 provided in a central part of the upper surface of the cover member 12. The smaller aperture 102 is provided with a tapered surface 103 so tapered that the diameter becomes smaller from the external surface toward the chemical agent 14.
Other constructions are similar to those in the aforementioned first embodiment.

Consequently the present embodiment, in which the lifted part (22) and the protruded part (15) are formed integrally to construct an integral protruded part 101 that projects from the bottom portion of the main body 13 to the exterior, penetrating through a smaller aperture 102 provided in a central part of the upper surface of the cover member 12, can simplify the structure without deteriorating the efficiency of capture and/or control, thereby suppressing the production cost. Also the smaller aperture 102 becomes an annular shape by the presence of the integral protruded part 101, whereby the flying harmful insects gathered and perched on the integral protruded part 101 can be effectively attracted into the interior of the container 11.
Also the smaller aperture 102 may be formed, instead of the tapered surface 103, into a shape having a diameter gradually reduced from the external surface toward the chemical agent 14 and having a hole in the bottom portion, namely a bowl shape having a hole in a part of the bottom portion.

In the present embodiment, in which the smaller aperture 102 is provided with a tapered surface 103 so tapered that the diameter becomes smaller from the external surface toward the chemical agent 14, the smaller aperture 102 suppresses the flying harmful insect, entering the container 11 from the integral protruded part 101 through the smaller aperture 102, from returning to the exterior of the container 11, thereby improving the efficiency of capture and/or control for the flying harmful insect.

Also the present embodiment can suppress the production cost as the cover member 12 and the main body 13 can be integrally formed. In such case, the chemical agent 14 is filled through the apertures 16 and 102. Incidentally, a refill port for refilling the chemical agent 14 may be formed on a side or a bottom of the harmful insect trap 100 separately from the apertures.

### (Tenth embodiment)

In the following, a tenth embodiment of the present invention will be described with reference to Fig. 13.

In a harmful insect trap 110 of the present embodiment, the protruded part (15) is not provided in the central portion of the cover member 12, but four pillar parts 111 are instead formed on an edge portion of a main body 113, equidistantly along the circumferential direction thereof. The pillar part 111 is integrally connected to the main body 113 in an intermediate portion in the longitudinal direction thereof, and has an upward extended part 112 extended upwards from the connected position and a downward extended part 113 extended downwards from the connected position.

The upward extended part 112 serves as the aforementioned protruded part (15), thus providing the flying harmful insect with a perch. Also the downward extended part 113 comes into contact, at the end thereof, with the floor and serves as a leg of the container 11.
Other constructions are similar to those in the aforementioned first embodiment.

Therefore, the present embodiment, having four pillar parts 111 at the edge of the main body 113, can provide the flying harmful insect with many perches by the upward extended parts 112 thereby effectively attracting the flying harmful insect, and allows to stably place the container 11 by the downward extended parts 113.

Not limited to each of the foregoing embodiments but in any thereof, the protruded parts 15, 31 preferably have a dimension of an external diameter of from 5 to 20 mm and a height of from 25 to 70 mm, in consideration of the moving behavior of the flying harmful insects. Further, a shape of the protruded parts may be any of cylindrical column, prismatic column, polyangular column, circular cone, pyramid and the like as long as the dimension is within the above described range. Also in any of the embodiments, the larger aperture 16 preferably has an area of from 10 to 300 mm² with a longitudinal size of from 5 to 30 mm and a lateral size of from 2 to 10 mm, and the smaller aperture 17 preferably has an area of from 10 to 140 mm² with a longitudinal size of from 5 to 20 mm and a lateral size of from 2 to 7 mm. Furthermore, in any of the embodiments, the lifted part 22 or 98 advantageously has a height within a range up to 60% of the height of the main body 13, also may be formed into an irregular shape or in an inverted bowl shape, and may be provided in plural units.

### [Examples]

In the following, examples conducted with the harmful insect trap 10, for the purpose of verifying the effectiveness of the harmful insect traps 10, 30, 40, 50, 60, 70, 80, 100 and 110, will be described with reference to Tables 1 to 5.
Table 1 shows evaluation results relating to the linear protruded part in Example 1; Table 2 shows evaluation results relating to the protruded part in Example 2; Table 3 shows evaluation result on a relationship between the color of the container and the attraction activity in Example 3; Table 4 shows evaluation result on a relationship between the color of the container and the attraction activity in Example 4; and Table 5 shows evaluation results relating to the embossing work in Example 5.

A test was conducted in order to confirm the effectiveness of the linear protruded parts 18, 20 in the harmful insect trap 10. The contents of test will be shown below.

### (Example 1)

### [Test]

(Formulation) blended amounts (mass%) in a fill amount of 20 g dinotefuran (insecticide): 0.15
black vinegar (attractant): 20
Shaoxing wine (attractant): 11.1
liquid-absorbent polymer (carrier): 10
water (solvent): appropriate amount

### (Specimen)

On the internal surface of the container 11 of the harmful insect trap 10, the linear protruded parts are formed only in one side of the left and right symmetrical halves, and a partition piece is disposed at the center of the interior of the harmful insect trap 10 in order that the area having the linear protruded parts and the area not having the linear protruded part can be distinguished. Other constructions are same as those in the aforementioned embodiment.

### (Test insect)

### about 100 Drosophila melanogasters (male and female mixed)

### (Testing and evaluating method)

1. Test insects were released in a cage of 90 cm × 90 cm × 90 cm, containing water and assimilated to the environment.
2. The specimen was placed at the center of the cage, and the test insects, captured or controlled in each of the area having the linear protruded parts and the area not having the linear protruded parts, separated by the partition piece, were counted after 1 hour and compared. The results of thus conducted test are shown in Table 1.

**[Table 1]**

| | linear protruded parts present | linear protruded parts absent |
|---|---|---|
| 1st time | 26 | 8 |
| 2nd time | 22 | 12 |

As shown in Table 1, the area having the linear protruded parts showed an evident increase in the number of capture/control in comparison with the area not having the linear protruded parts, both in the first and second tests. It was thus clarified that the linear protruded parts, disposed toward the chemical agent on the internal surface of the harmful insect trap, increased the number of capture/control of the Drosophila melanogaster used as the test insect.

### (Example 2)

A test was conducted in order to confirm the effectiveness of the protruded part 15 provided in the cover member 12 of the harmful insect trap 10. The contents of test will be shown below.

### [Test]

(Formulation) blended amounts (mass%) in a fill amount of 20 g dinotefuran (insecticide): 0.15
black vinegar (attractant): 20
shaoxing wine (attractant): 11.1
liquid-absorbent polymer (carrier): 10
water (solvent): appropriate amount

### (Specimen)

The container is prepared in two types, namely one having a protruded part 15 of a height of 35 mm and a diameter of 18 mm (cf. Fig. 1) on the cover member 12 of the harmful insect trap 10 and the other one not having the protruded part. Other constructions are similar to those in the aforementioned embodiment.

### (Test insect)

about 100 Drosophila melanogasters (male and female mixed)

### (Testing and evaluating method)

1. Test insects were released in a cage of 90 cm × 90 cm × 90 cm, containing water and assimilated to the environment.
2. The specimens were placed at the center of the cage, and the numbers of capture/control were counted after 1 hour and compared. The results of thus conducted test are shown in Table 2.

**[Table 2]**

| | protruded parts present | protruded parts absent |
|---|---|---|
| 1st time | 32 | 9 |
| 2nd time | 21 | 8 |

As shown in Table 2, the harmful insect trap having the protruded part on the cover member showed a satisfactory count of capture/control in comparison with the harmful insect trap not having the protruded part, both in the first and second tests. It was thus identified that the presence of protruded part increased the number of capture/control of the Drosophila melanogaster used as the test insect. Though the present test was conducted with the harmful insect trap 10 shown in Fig. 1, but the protruded part is considered to achieve capture/control by an effective attraction, and is applicable to the harmful insect trap of various shapes.

### (Example 3)

A test was conducted in order to confirm the effectiveness of the color of the container 11 of the harmful insect trap 10. The contents of test will be shown below.

### [Test]

(Formulation) blended amounts (mass%) in a fill amount of 50 g dinotefuran (insecticide): 0.15
black vinegar (attractant): 20
Shaoxing wine (attractant): 11.1
liquid-absorbent polymer (carrier): 10
water (solvent): appropriate amount

### (Specimen)

Resin containers are colored in various colors with lacquer sprays and used as the containers.
reference color: semi-transparent white (not colored)
tested colors: red, blue, green, yellow-green, yellow, orange, pink, black, brown, purple, and white

### (Test insect)

50 to 100 Drosophila melanogasters (male and female mixed)

### (Testing method)

1. Test insects were released in a cage of 90 cm × 90 cm × 90 cm, containing water and assimilated to the environment.
2. Both specimens were placed at the center of the cage, and the number of capture/control was counted after 1 hour.

### (Evaluating method)

Evaluation is made by an attraction ratio.
Attraction ratio: (capture/control count in test color)/(capture/control count in reference color)
The results of thus conducted test are shown in Table 3.

**[Table 3]**

| | semitransparent white | black | attraction ratio |
|---|---|---|---|
| capture/control count | 11 | 45 | 4.1 |
| | | | |

| | semitransparent white | purple | attraction ratio |
|---|---|---|---|
| capture/control count | 17 | 23 | 1.4 |
| | | | |

| | semitransparent white | blue | attraction ratio |
|---|---|---|---|
| capture/control count | 17 | 54 | 3.2 |
| | | | |

| | semitransparent white | green | attraction ratio |
|---|---|---|---|
| capture/control count | 45 | 70 | 1.6 |
| | | | |

| | semitransparent white | yellow-green | attraction ratio |
|---|---|---|---|
| capture/control count | 9 | 43 | 4.8 |
| | | | |

| | semitransparent white | yellow | attraction ratio |
|---|---|---|---|
| capture/control count | 21 | 52 | 2.5 |

| | semitransparent white | brown | attraction ratio |
|---|---|---|---|
| capture/control count | 4 | 45 | 11.3 |
| | | | |

| | semitransparent white | orange | attraction ratio |
|---|---|---|---|
| capture/control count | 6 | 37 | 6.2 |
| | | | |

| | semitransparent white | red | attraction ratio |
|---|---|---|---|
| capture/control count | 5 | 68 | 13.6 |
| | | | |

| | semitransparent white | pink | attraction ratio |
|---|---|---|---|
| capture/control count | 10 | 36 | 3.6 |
| | | | |

| | semitransparent white | white | attraction ratio |
|---|---|---|---|
| capture/control count | 14 | 21 | 1.5 |

As shown in Table 3, in the attraction ratio, the warm-colored containers showed high values such as 13.6 in a red-colored container, 11.3 in a brown-colored container and 6.2 in an orange-colored container, while the cold-colored containers showed very low values such as 1.4 in a purple-colored container, 1.5 in a white-colored container, and 1.6 in a green-colored container. It was thus identified that Drosophila melanogaster used as the test insect was attracted by the warm color such as red, brown or orange, thus resulting in an increased number of capture/control.

### (Example 4)

In succession to Example 3, a test was conducted in order to confirm the effectiveness of the color of the container. The contents of test will be shown below.

### [Test]

(Formulation) blended amounts (mass%) in a fill amount of 50 g dinotefuran (insecticide): 0.15
black vinegar (attractant): 20
Shaoxing wine (attractant): 11.1
liquid-absorbent polymer (carrier): 10
water (solvent): appropriate amount

### (Specimen)

Resin containers are colored in various colors with lacquer sprays and used as the containers.
reference color: red
tested colors: blue, green, yellow-green, yellow, orange, pink, black, brown, purple, and white

### (Test insect)

50 to 100 Drosophila melanogasters

### (Method)

1. Test insects were released in a cage of 90 cm × 90 cm × 90 cm, containing water and assimilated to the environment.
2. Both specimens were placed at the center of the cage, and the number of capture/control was counted after 1 hour.

### (Evaluating method)

Evaluation is made by an attraction ratio.
Attraction ratio: (capture/control count in test color)/(capture/control count in reference color)
The results of thus conducted test are shown in Table 4.

**[Table 4]**

| | red | black | attraction ratio |
|---|---|---|---|
| capture/control count | 44 | 40 | 0.9 |
| | | | |

| | red | purple | attraction ratio |
|---|---|---|---|
| capture/control count | 56 | 15 | 0.3 |
| | | | |

| | red | blue | attraction ratio |
|---|---|---|---|
| capture/control count | 63 | 24 | 0.4 |

| | red | green | attraction ratio |
|---|---|---|---|
| capture/control count | 20 | 16 | 0.8 |
| | | | |

| | red | yellow-green | attraction ratio |
|---|---|---|---|
| capture/control count | 17 | 7 | 0.4 |
| | | | |

| | red | yellow | attraction ratio |
|---|---|---|---|
| capture/control count | 27 | 14 | 0.5 |
| | | | |

| | red | brown | attraction ratio |
|---|---|---|---|
| capture/control count | 40 | 42 | 1.1 |
| | | | |

| | red | orange | attraction ratio |
|---|---|---|---|
| capture/control count | 47 | 47 | 1.0 |
| | | | |

| | red | pink | attraction ratio |
|---|---|---|---|
| capture/control count | 21 | 18 | 0.9 |
| | | | |

| | red | white | attraction ratio |
|---|---|---|---|
| capture/control count | 40 | 35 | 0.9 |

As shown in Table 4, in the attraction ratio, the warm-colored containers showed high values such as 1.1 in a brown-colored container and 1.0 in an orange-colored container, while the cold-colored containers showed very low values such as 0.3 in a purple-colored container, 0.4 in a blue-colored container, and 0.4 in a yellow-green-colored container. It was thus identified that Drosophila melanogaster used as the test insect was attracted by the warm color such as brown or orange as in the case of red color, and captured or controlled. This present test was conducted with a cup-shaped container, but the result is applicable not only in the case of utilizing the harmful insect trap 10 shown in Fig. 1 but also to the various harmful insect traps.

### (Example 5)

A test was conducted in order to confirm the effectiveness of the embossing on the surface of the container 11 in the harmful insect trap 10. The contents of test will be shown below.

### [Test]

(Formulation) blended amounts (mass%) in a fill amount of 50 g dinotefuran (insecticide): 0.15
black vinegar (attractant): 20
Shaoxing wine (attractant): 11.1
liquid-absorbent polymer (carrier): 10
water (solvent): appropriate amount

### (Specimen)

On the whole surface of the harmful insect trap 10, an embossed surface and a glossy surface are formed respectively in the left and right symmetrical halves, and a partition piece is disposed at the center of the interior of the harmful insect trap 10 in order that the embossed side and the glossy side can be distinguished. Other constructions are same as those in the aforementioned embodiment.

### (Test insect)

about 100 Drosophila melanogasters (male and female mixed)

### (Testing and evaluating method)

1. Test insects were released in a cage of 90 cm × 90 cm × 90 cm, containing water and assimilated to the environment.
2. The specimen was placed at the center of the cage, and the test insects, captured or controlled in each of the embossed side and the glossy side, separated by the partition piece, were counted after 1 hour and compared.

The results of thus conducted test are shown in Table 9.

**[Table 5]**

| | embossed side | glossy side |
|---|---|---|
| 1st time | 28 | 21 |
| 2nd time | 29 | 24 |
| 3rd time | 40 | 34 |
| 4th time | 30 | 22 |

As shown in Table 5, the embossed part showed satisfactory number of capture/control in comparison with the glossy part in any of 1st to 4th tests. It was thus identified that the embossing on the surface of the harmful insect trap increased the number of capture/control of the Drosophila melanogaster used as the test insect. Though the present test was conducted with the harmful insect trap 10 shown in Fig. 1, according to the present example, the embossing is considered to improve the attractant property thereby increasing the number of capture/control, and is applicable to the harmful insect trap of various types.

The present invention is not limited to the aforementioned embodiments, but is subject to modifications and improvements. Also the constituent components in the aforementioned embodiments are not restricted in material, shape, dimension, numerical value, form, number, position and the like so far as the object of the invention can be accomplished.

For example, the number of each of the larger apertures and the smaller apertures is not restricted to five as illustrated but may be a plural number at least equal to two.

Also the number of the protruded part is not restricted to one or three as illustrated, but may be an even number such as two, four or larger, and the protruded part is not restricted particularly in the position thereof but is preferably provided on the cover member.

Also the linear protruded part may be provided not only on the internal surface of the cover member but also on the external surface thereof. In such case, the flying harmful insect perching on the protruded part can be effectively attracted to the aperture.

This application claims the benefit of Japanese Patent Application No. 2006-314632, filed November 21, 2006 and Japanese Patent Application No. 2006-318663, filed November 27, 2006, which are hereby incorporated by reference herein in their entirety.

## Claims

1. A harmful insect trap comprising a container having an aperture, and a chemical agent containing at least a harmful insect attractant component and contained in the container, and adapted to attract a harmful insect into the container through the aperture thereby achieving capture and/or control,
wherein a linear protruded part is disposed toward the chemical agent on an internal surface of the container.

2. The harmful insect trap according to claim 1, wherein the linear protruded parts are disposed equidistantly on the internal surface of the container.

3. The harmful insect trap according to claim 1 or 2, wherein the container comprises a protruded part, protruded upwards at a placed state thereof.

4. A harmful insect trap comprising a container having an aperture, and a chemical agent containing at least a harmful insect attractant component and contained in the container, and adapted to attract a harmful insect into the container through the aperture thereby achieving capture and/or control,
wherein the container comprises a protruded part, protruded upwards at a placed state thereof, and
the aperture is disposed at least on a lateral portion of the protruded part.

5. The harmful insect trap according to any one of claims 1 to 4, wherein the chemical agent is contained in a bottom part of the container, and
a lifted part is formed in the bottom part.

6. The harmful insect trap according to any one of claims 1 to 5, wherein the container comprises a main body and a cover member having a dome shape and assembled with the main body, and
the aperture is disposed at least in the cover member.

7. The harmful insect trap according to any one of claims 3 to 6, wherein the protruded part is formed in plural units.

8. The harmful insect trap according to any one of claims 1 to 7, wherein the container is formed in a substantially polygonal shape.

9. The harmful insect trap according to any one of claims 1 to 8, wherein the aperture is formed in a shape of a hole of which diameter is reduced from an external surface toward the chemical agent.

10. The harmful insect trap according to any one of claims 3 to 9, wherein the protruded part comprises a design part.

11. The harmful insect trap according to any one of claims 1 to 10, wherein the container comprises a bottle insertion aperture for detachably mounting a chemical agent replenishing bottle for replenishing the chemical agent.

12. The harmful insect trap according to any one of claims 1 to 11, wherein the container comprises a hanging part for hanging.

13. The harmful insect trap according to any one of claims 1 to 12, wherein the container comprises a light-emitting portion in a part thereof.

14. The harmful insect trap according to any one of claims 5 to 13, wherein the lifted part is so formed as to be integral with the protruded part and to be projected externally through the aperture.
